# EUROPEAN PATENT SPECIFICATION

(11) **EP 2 333 501 B1**
(45) Date of publication and mention of the grant of the patent: **25.07.2012**
(21) Application number: 09306159.6
(22) Date of filing: 30.11.2009
(51) Int. Cl.: G01J 3/44, G02B 21/00, G01J 3/02

(54) **Apparatus and method for automatic optical realignment**
Vorrichtung und Verfahren zur automatischen optischen Neuausrichtung
Appareil et procédé de réalignement optique automatique

(43) Date of publication of application: 15.06.2011
(73) Proprietor: Horiba Jobin Yvon SAS, 91165 Longjumeau Cédex (FR)
(72) Inventor: Kashiwagi, Shinsuke, OSAKA 569-0814 (JP); Froigneux, Emmanuel, 59650 Villeuneuve d'Ascq (FR); Roussel, Bernard, 59300 Valenciennes (FR)
(74) Representative: Michelet, Alain

(56) References cited:
- EP-A1- 1 767 980
- WO-A2-2007/076491
- DE-A1- 3 942 514
- DE-A1-102005 020 542
- US-A1- 2007 165 221

## Description

The present invention pertains to the field of optical measurement apparatus and to correction method of optical misalignment in such optical instruments. More precisely, the invention concerns a method and apparatus for correcting misalignment of mulitple optical axis in an optical measurement apparatus.

In particular, the invention applies to microspectrometers having a primary light source for irradiating a sample and a detector for detecting a secondary light beam generated upon sample irradiation by the primary light beam, such as for example Raman microspectrometers.

Optical instruments enabling both microscopic and spectroscopic investigation of samples provide invaluable information in sample analysis. Raman or fluorescence microspectrometry have gained increased application areas in the last decade. In the same time, higher spatial and spectral resolution are continuously required, which drives to the development of more and more powerful optical instruments.

During fabrication, optical microspectrometers are generally aligned and calibrated using special fabrication tools and reference calibration samples. Because small misalignment in the optical axis of the primary or secondary beams can lead to errors in spatially and spectrally resolved measurements, the optical axis of such instruments need realignment from time to time. However, the special fabrication tools and reference samples are usually not available at the user's site. Of course, the higher the spatial and spectral resolutions, the greater is the influence of small optical misalignments.

Thus, there is a need for tools and methods for precisely realigning optical microspectrometers, in order to ensure that these instruments provide constantly high level measurements to the users over time.

Document US 6661509 describes an alignment method and instrument for a Raman spectrographic microscope. For performing alignment, an alignment instrument comprising a plate with a spatially limited aperture is mounted on the sample stage. First, the small aperture is positioned at the focal point of the objective lens of the microscope. Correct positioning of the small aperture is controlled visually by an operator through the ocular of the microscope. Then, the return light path, going from a light source behind the aperture on to the spectrometer detector, is adjusted by maximizing the detected flux while adjusting an optical system in the return path. Similarly, the excitation beam path, going from the excitation light source through the alignment aperture onto a detector located behind said aperture, is adjusted by maximizing the detected flux while adjusting an optical system in the excitation path.

However, the alignment tool and method of US6661509 are limited by the visual alignment of the alignment aperture.

Document US7460229 also discloses an alignment tool and method for a spectroscopic microscope. An alignment unit comprises a spatially limited aperture, a stage light source and a stage detector. The alignment unit is removably attached to the sample stage during the alignement procedure. The visual system of the microscope comprises a viewer light sensor for detecting and automatically aligning the aperture and stage light source with respect to the microscope tube and viewer system. In addition, the spectrograph includes a return light source which may be actuated to emit a light through the spectrograph aperture toward the stage sensor for alignment of the return beam path. The automatic alignment steps provide rapid and optimal alignment.

In summary however, these alignment tools and methods rely on the alignment of input and return beams through a limited aperture on the sample stage. The smaller the aperture, the higher the positioning accuracy, but the lower the detected alignment flux. Thus, in practice, the minimum aperture diameter used is around 10 microns, which limits the alignment precision. Besides, when using an alignment unit on the sample stage, misalignments between the aperture and stage light source or misalignment of the sample stage itself might introduce errors in the alignments of the excitation or return paths. Also these systems require an additional light source.

Another drawback of these alignment techniques is that the sample stage must be free from any sample for receiving the alignment unit.

Thus there is a need for accurate, fast and automatic optical realignment in micro-spectro-photometric instrument.

One of the objectives of the invention is to provide an apparatus and a method for automatically correcting misalignment of incident and return beams in a measurement apparatus.

The present invention aims at solving these problems and concerns more particularly an optical measurement apparatus comprising a light source for generating an incident light beam, a sample stage for holding a sample to be measured, a microscope objective for focusing said incident light beam on said sample, a first optical system comprising at least one optical component for directing said incident light beam from said light source to said microscope objective along an incident beam path, means for adjusting optical alignment of said at least one optical component of said first optical system, a spectrometer comprising a measurement detector for measuring secondary light emitted from said sample under irradiation by said incident beam, a second optical system for collecting secondary light generated from said sample under irradiation by said incident beam, and for directing said secondary light toward said spectrometer along a return beam path, and means for adjusting optical alignment of said at least one optical component of said second optical system.

According to the invention the optical measurement apparatus further comprises at least one out of a first switching mirror and a second switching mirror, said first switching mirror having a position where said first switching mirror is inserted in said incident light path between said light source and said microscope objective, for directing said incident light beam toward a first detector for optical misalignment detection of said incident beam path, and said second switching mirror having a position where said second switching mirror is inserted in said incident light path between said light source and said microscope objective, for directing said incident light beam along said return beam path toward a second detector for detecting optical misalignment in said return beam path, wherein said first and second switching mirrors have respectively another position retracted out of said incident beam path for sample measurement.

According to a preferred embodiment of the invention, the optical measurement apparatus comprises a first switching mirror and a second switching mirror.

According to an embodiment of the invention, said light source of said optical measurement apparatus is a laser.

According to a preferred embodiment of the invention, the spectrometer is a Raman spectrometer for Raman analysis.

According to a preferred aspect of the invention, said secondary beam is generated by reflection of said incident beam on said sample.

According to another aspect of the invention, said secondary beam is generated by transmission of said incident beam on said sample.

According to different aspects of the invention :
- said first detector and/or second detector is a four-quadrant detector ;
- said second detector is said measurement detector ;
- said measurement apparatus further comprises a microscope viewer system, said viewer system comprising a viewing camera, and said first and/or second detector(s) is(are) said viewing camera ;
- said second switching mirror directs said incident light beam through an entrance port of said spectrometer toward said return beam path, in a direction opposed to the direction of said secondary light ;
- said first switching mirror and/or second switching mirror is(are) partially reflecting mirror(s) ;
- said measurement apparatus further comprises a moveable plate supporting said first and second switching mirrors and further comprising a large aperture for selectively : passing incident light beam through said large aperture or inserting said first switching mirror or inserting said second switching mirror on said incident beam path between said light source and said microscope objective ;
- said measurement apparatus further comprises a realignment control unit and means for automatically readjusting said first optical system and said second optical system as a function of detection of a misalignment in said incident or secondary beam paths.

The invention also concerns a realignment method for an optical measurement apparatus according to any of the above embodiments and comprising the steps of :
- aligning completely said optical measurement apparatus, inserting said first switching mirror on said incident beam path between said light source and said microscope objective for acquiring a reference spot image of the incident light on said first detector, then inserting said second switching mirror on said incident beam path between said light source and said microscope objective for acquiring a reference spot image of the return light and/or the intensity of the return light on the second detector,
- inserting said first switching mirror on said incident beam path between said light source and said microscope objective, and detecting said incident light on said first detector, measuring the misalignment between said reference image and said incident light, readjusting at least one optical component in first optical system for correcting said incident beam path misalignment,
- inserting said second switching mirror on said incident beam path between said light source and said microscope objective, and detecting said return light on said second detector, measuring the misalignment between said reference image and said return light, readjusting at least one optical component in second optical system for correcting said return beam path misalignment.

According to a particular aspect, the realignment method further comprises the steps of :
- scanning the orientation of said optical component with a large travel step along a scanning line for determining roughly the position of the return light on said second detector, and then
- scanning the orientation of said optical component with a small travel step along scanning line for determining precisely the position of return light on said second detector.

The present invention also concerns the features deriving from the following description and that should be considered alone or according to any any technically possible combination.

This description of a preferred non limiting embodiment will explain better how the invention can be reproduced in reference to the annexed drawings where:
Fig.1 represents schematically a side view of a measurement apparatus comprising an alignment system according to a first embodiment of the invention ;
Fig.2 represents schematically a top view of the reference spot image (Fig. 2A) and the misalignment light spot image (Fig. 2B), on the incident light alignment detector;
Fig.3 represents schematically a side view of a measurement apparatus comprising an alignment system according to a second embodiment of the invention ;
Fig.4 represents schematically the relation between the return light spot and the confocal hole in the optically aligned position (Fig. 4A) and respectively in the misaligned position (Fig. 4B).
Fig.5 represents schematically a method for detecting the return light spot on the measurement detector.

The description of a preferred embodiment of the invention follows.

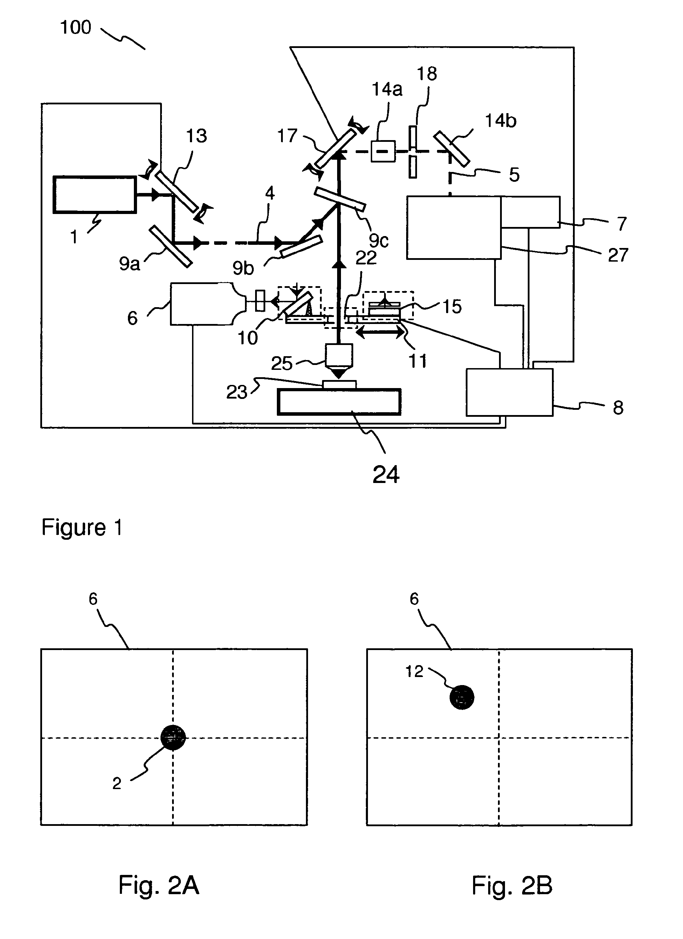

Fig.1 represents an optical measurement apparatus 100 according to a first embodiment of the invention.

The optical measurement apparatus 100 comprises a laser light source 1, emitting an incident laser light beam. An incident optical system comprises several optical components 13, 9a, 9b, 9c for directing said incident laser beam 4 along an incident beam path toward a microscope objective 25 for illuminating a sample 23 to be measured. In the example represented on figure 1, the optical system preferably comprises reflecting optical components or mirrors 13, 9a, 9b and a notch injection/rejection filter 9c. The positions and orientations of the mirrors in the incident optical system enable alignment of the incident laser beam relatively to the axis of the microscope objective 25. The sample 23 is placed on a sample stage 24 and lies preferably in the focal plane of the microscope objective 25.

In a preferred embodiment the optical measurement apparatus 100 is a Raman micro spectrometer for microanalysis of the Raman features of a sample.

Raman signal is reflected from the sample surface along a return beam path. An optical system comprising several mirrors 17, 14b and filters 9c, 14a directs said return light beam toward the entrance of a Raman spectrometer 27. A detector 7 at the output of the spectrometer 27 measures the Raman signal in the return light beam, for example as a function of incident light beam position on the sample surface and as a function of wavelength. In a preferred embodiment, the Raman microspectrometer comprises a confocal hole 18.

During fabrication, the measurement apparatus 100 is mounted and aligned completely, using tools and alignment methods that are not detailed here, but provide an initial alignment of the measurement apparatus 100. After this initial alignement, a reference spot image 2 of the incident light 4 is acquired by an incident line alignment detector 6. Similarly, a reference spot image 3 of the return light 5 is acquired by the measurement detector 7. These reference images are stored in a control unit 8 comprising a storing device.

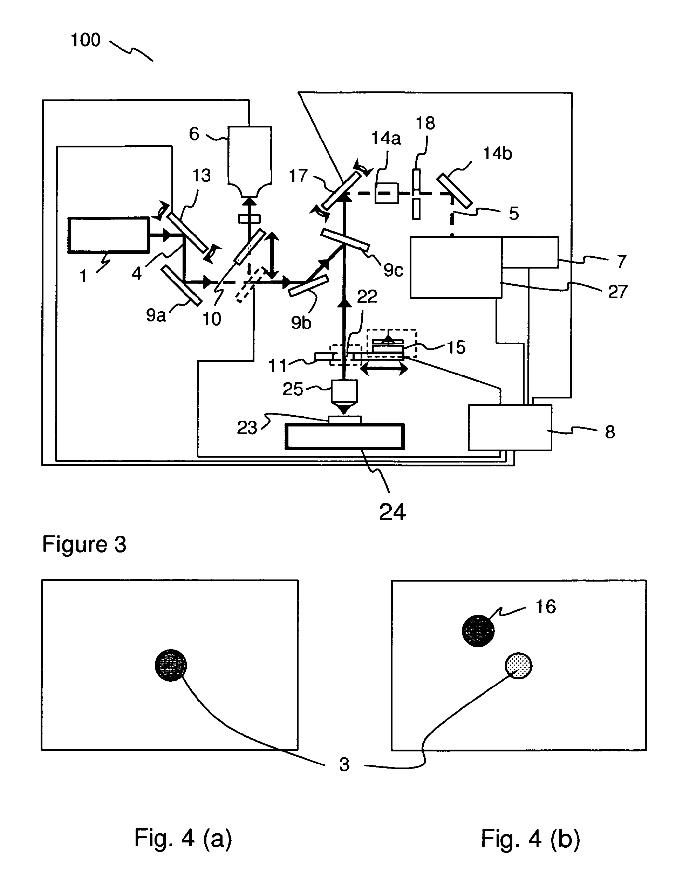

The initial alignement positions of the reference spot image 2, 3 stored will then be used as a reference for further realignement procedure (see Figures 2A and 4A).

For performing the optical misalignment correction, the incident light optical system 13, 9a, 9b, 9c is aligned in a first step. In this first step, a first switching mirror 10 supported by a movable plate 11 is inserted in the optical axis of the incident light 4. Then, the incident light 4 is detected by the incident line alignment detector 6. If the incident line alignment detector 6 acquires the misalignment light spot 12, having a different position as compared to the position of reference spot image 2, then the misalignment is corrected by tilting a mirror 13 in the incident optical system while checking the incident light spot position and the intensity of the incident light 4 on the incident line alignment detector 6, and comparing with the reference spot image 2 of the incident light 4. For exemple, the mirror 13 can be adjusted using piezoelectric actuators for tilt adjustment.

The detector 6 is for example a four-quadrant detector.

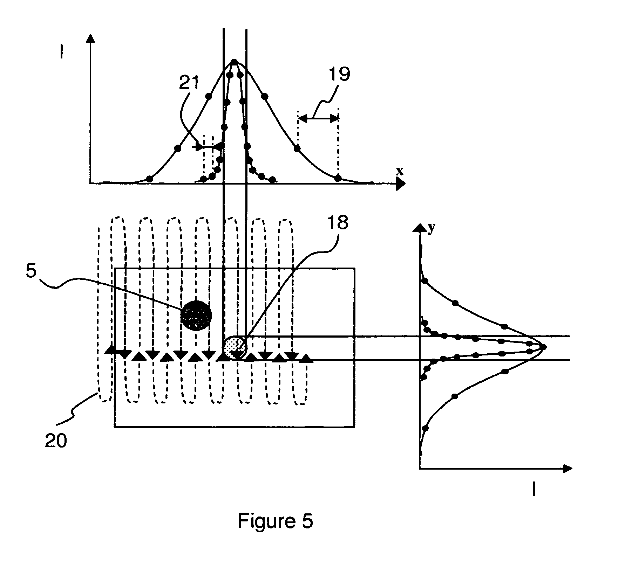

After the incident line alignment process is finished, the return light optical system is aligned. In this process, a second switching mirror 15 located on the movable plate 11 is inserted on the optical axis of the incident light 4 and the return light 5. Then, the return light 5 is detected by the measurement detector 7. If the measurement detector 7 acquires the misalignment light spot 16, which position is different from the position of reference spot image 3 (see Fig 4A and 4B), then the misalignment is corrected by tilting a mirror 17 in the return optical system, while checking the return light spot position and the intensity of the return light 5 on the measurement detector 7, and comparing with the reference spot image 3 of the return light 5. In case the measurement detector 7 does not detect the misalignment light spot 16, for example because of too much misalignment at confocal hole 18 position (this situation can be found in Fig.4B), then firstly the return light 5 detecting process is done using the measurement detector 7 before the aforementioned misalignment correction process is done. In this process, represented schematically on Figure 5, firstly the position of the return light 5 is found out roughly on the measurement detector 7 scanning the adjustable mirror 17 with a large travel step 19, for example along a scanning line 20. After that, the position of the return light 5 is detected on the measurement detector 7 scanning the adjustable mirror 17 with a small travel step 21. As a result, the return light 5 can be detected on the measurement detector 7. And then, if needed, the aforementioned misalignment correction process is done.

When the alignment steps are completed, the large aperture 22 on the movable plate 11 is inserted on the optical axis of the incident light 4 and the return light 5 for getting through the incident light 4 to the sample 23 and to the sample stage 24. Normal measurement of the sample 23 using the spectrometer 27 can then be performed.

Fig.3 represents another embodiment of the invention.

The measurement apparatus 100 of figure 3 comprises a switching mirror 10 and a detector 6 for detecting incident beam 4 position. The switching mirror 10 is moveable between two positions : in a retracted position, the mirror 10 does not intercept the incident beam 4 which continues along the incident beam path ; in an inserted position, the mirror 10 is inserted in the incident beam path an directs said incident light beam 4 toward the detector 6.

The measurement apparatus 100 of figure 3 comprises a plate 11 comprising a large aperture 22 and a switching mirror 15. The plate 11 is moveable between two positions relatively to the incident beam 4. In a first position, the large aperture 22 is aligned with the incident light beam 4 and with the axis of the microscope objective : the incident laser beam 4 and the return beam 5 can pass through the large aperture 22 and regular measurement of the sample 23 is performed using the spectrometer 27 and detector 7. In a second position, a mirror 15 is inserted in said incident light beam 4 path : the incident laser beam 4 is reflected by mirror 15 along the optical path of the return beam 5 toward detector 7.

The misalignment correction system of the apparatus represented on figure 3 is used in the following way.

After the measurement apparatus 100 is aligned completely, a reference spot image 2 of the incident light 4 is acquired by an incident line alignment detector 6. Similarly, a reference spot image 3 of the return light 5 is acquired by the measurement detector 7. These reference images are stored in a control unit 8 comprising a storing device.

For performing an optical misalignment correction, the incident light optical system (13, 9a, 9b, 9c) is aligned in a first step. In this first step, the switching mirror 10 is inserted on the optical axis of the incident light 4. After that, the incident light 4 is detected by the incident line alignment detector 6. If the incident line alignment detector 6 acquires the misalignment light spot 12, then the misalignment is corrected by adjusting a first mirror 13, while checking the incident light spot position and the intensity of the incident light 4 on the incident line alignment detector 6, and comparing with the reference spot image 2 of the incident light 4.

After the incident line alignment process is finished, the return light optical system (14a, 14b, 17) is aligned. In this second step, the switching mirror 15 on the movable plate 11 is inserted on the optical axis of the incident light 4. Then, the return light 5 is detected by the measurement detector 7. If the measurement detector 7 acquires the misalignment light spot 16, then the misalignment is corrected by adjusting a second adjustable mirror 17, while checking the return light spot position and the intensity of the return light 5 on the measurement detector 7, and comparing with the reference spot image 3 of the return light 5. In case the measurement detector 7 can't detect the misalignment light spot 16, for example because of the too much misalignment at confocal hole 18 position (this situation can be found in Fig.4B), then firstly the return light 5 detecting process is done using the measurement detector 7 before the aforementioned misalignment correction process is done. In this process, firstly the position of the return light 5 is found out roughly on the measurement detector 7 scanning the adjustable mirror 17 with big travel step 19, for example along a scanning line 20. After that, the position of the return light 5 is detected on the measurement detector 7 scanning the second movable mirror 17 with small travel step 21. As a result, the return light 5 can be detected on the measurement detector 7. And then, if it's needed, the aforementioned misalignment correction process is done.

After finishing the above misalignment correction process, the large aperture 22 of the movable plate 11 is inserted on the optical axis of the incident light 4 and the return light 5 for getting through the incident light 4 to the sample 23 and to the sample stage 24.

In a preferred embodiment of the invention, the apparatus comprises a microscope viewer system equiped with a viewing camera. The viewing camera can be used as the incident line alignment detector 6. This solution does not require an additional four-quadrant detector.

In another embodiment of the invention, the second switching mirror may direct the incident light beam through the entrance port of said spectrometer 27 toward said return beam path, in a direction opposed to the direction of the secondary light emission from the sample. Instead of using the spectrometer detector, the incident line alignment detector can be used for detecting return light misalignment. As explained above, the incident line alignment detector might be a microscope viewing camera, enabling both incident and return light alignment.

During the realignement process, the optical beam does not go through the microscope objective and is neither reflected nor refracted by the sample. The misalignment correction system and process of the invention do not rely on an optical alignment system located on the sample stage, thus eliminating errors coming from the sample stage misalignment. Another advantage of the system is that realignment of the measurement apparatus can be performed without moving a sample from the sample stage.

Switching mirrors and detectors for realignment can be incorporated inside the measurement apparatus and can be driven automatically by a control unit. Realignment can thus be fully automated.

The realignement system and method of the invention do not require an additional light source. A laser can be used for sample irradiation and measurement as well as for incident beam realignment and reflected beam realignement. The realignement system and method is thus more reliable than previous realignment systems and methods.

## Claims

1. An optical measurement apparatus (100) comprising:
- a light source (1) for generating an incident light beam (4),
- a sample stage (24) for holding a sample (23) to be measured,
- a microscope objective (25) for focusing said incident light beam on said sample (23),
- a first optical system (13, 9a, 9b, 9c) comprising at least one optical component (13) for directing said incident light beam from said light source to said microscope objective (25) along an incident beam path,
- means for adjusting optical alignment of said at least one optical component (13) of said first optical system (13, 9a, 9b, 9c),
- a spectrometer (27) comprising a measurement detector (7) for measuring secondary light emitted from said sample (23) under irradiation by said incident beam,
- a second optical system (14a, 14b, 17) comprising at least one optical component (17) for collecting secondary light generated from said sample (23) under irradiation by said incident beam, and for directing said secondary light (5) toward said spectrometer (27) along a return beam path,
- means for adjusting optical alignment of said at least one optical component (17) of said second optical system,
**characterized in that** it comprises :
- a first switching mirror (10) and a second switching mirror (15),
- said first switching mirror (10) having a position where said first switching mirror (10) is inserted in said incident light path between said light source (1) and said microscope objective (25), for directing said incident light beam toward a first detector (6) for optical misalignment detection of said incident beam path,
- said second switching mirror (15) having a position where said second switching mirror is inserted in said incident light path between said light source (1) and said microscope objective (25), for directing said incident light beam along said return beam path toward a second detector for detecting optical misalignment in said return beam path,
and wherein said first and second switching mirrors (10, 15) have respectively another position retracted out of said incident beam path for sample measurement.

2. An optical measurement apparatus (100) according to claim 1 wherein said light source (1) comprises a laser light source.

3. An optical measurement apparatus (100) according to any of claims 1 to 2, wherein said spectrometer is a Raman spectrometer for Raman analysis.

4. An optical measurement apparatus according to any of claims 1 to 3, wherein said secondary beam is generated by reflection of said incident beam on said sample (23).

5. An optical measurement apparatus according to any of claims 1 to 3, wherein said secondary beam is generated by transmission of said incident beam on said sample (23).

6. An optical measurement apparatus according to any of claims 1 to 5, wherein said first detector (6) and/or second detector is a four-quadrant detector.

7. An optical measurement apparatus according to any of claims 1 to 6, wherein said second detector is said measurement detector (7).

8. An optical measurement apparatus according to any of claims 1 to 7, further comprising a microscope viewer system, said viewer system comprising a viewing camera, wherein said first and/or second detector(s) is(are) said viewing camera.

9. An optical measurement apparatus according to any of claims 1 to 8, wherein said second switching mirror (15) directs said incident light beam through an entrance port of said spectrometer (27) toward said return beam path, in a direction opposed to the direction of said secondary light.

10. An optical measurement apparatus according to any of claims 1 to 9, wherein said first switching mirror (10) and/or second switching mirror (15) is(are) partially reflecting mirror(s).

11. An optical measurement apparatus according to any of claims 1 to 10, further comprising a moveable plate (11) supporting said first and second switching mirrors (10, 15) and further comprising a large aperture for selectively : passing incident light beam through said large aperture or inserting said first switching mirror (10) or inserting said second switching mirror (15) on said incident beam path between said light source (1) and said microscope objective (25).

12. An optical measurement apparatus according to any of claims 1 to 11, further comprising a realignment control unit and means for automatically readjusting said first optical system (13, 9a, 9b, 9c) and said second optical system (14a, 14b, 17) as a function of detection of a misalignment in said incident (4) or secondary (5) beam paths.

13. A realignment method for an optical measurement apparatus (100) according to any of claims 1 to 12, comprising the steps of :
a) aligning completely said optical measurement apparatus (100), acquiring a reference spot image of the incident light on said first detector (6), and acquiring a reference spot image of the return light and/or the intensity of the return light on the second detector,
b) inserting said first switching mirror (10) on said incident beam path between said light source (1) and said microscope objective (25), and detecting said incident light on said first detector (6), measuring the misalignment between said reference spot image and said incident light, readjusting at least one optical component (13) in first optical system (13, 9a, 9b, 9c) for correcting said incident beam path misalignment,
c) inserting said second switching mirror (15) on said incident beam path between said light source (1) and said microscope objective (25), and detecting said incident light on said second detector, measuring the misalignment between said reference spot image and said return light, readjusting at least one optical component (17) in second optical system (14a, 14b, 17) for correcting said return beam path misalignment.

14. A realignment method according to claim 13 further comprising the steps of :
- scanning the orientation of said optical component (17) with a large travel step (19) along a scanning line (20) for determining roughly the position of the return light on said second detector (7), and then
- scanning the orientation of said optical component (17) with a small travel step (21) along scanning line (20) for determining precisely the position of return light on said second detector (7).

## Patentansprüche

1. Optisches Messgerät (100), umfassend:
- eine Lichtquelle (1) zum Generieren eines einfallenden Lichtstrahls (4),
- einen Probentisch (24) zum Halten einer zu messenden Probe (23),
- ein Mikroskopobjektiv (25) zum Fokussieren des einfallenden Lichtstrahls auf die Probe (23),
- ein optisches System (13, 9a, 9b, 9c), das mindestens ein optisches Bauteil (13) zum Richten des einfallenden Lichtstrahls von der Lichtquelle auf das Mikroskopobjektiv (25) an einem einfallenden Strahlengang entlang umfasst,
- Mittel zum Einstellen der optischen Ausrichtung des mindestens einen optischen Bauteiles (13) des ersten optischen Systems (13, 9a, 9b, 9c),
- ein Spektrometer (27), das einen Messdetektor (7) zum Messen sekundären Lichts, das von der Probe (23) unter Bestrahlung durch den einfallenden Strahl emittiert wird, umfasst,
- ein optisches System (14a, 14b, 17), das mindestens ein optisches Bauteil (17) umfasst, um sekundäres Licht zu sammeln, das von der Probe (23) unter Bestrahlung durch den einfallenden Strahl generiert wird, und um das sekundäre Licht (5) in Richtung auf das Spektrometer (27) an einem Rückführstrahlengang entlang zu richten,
- Mittel zum Einstellen der optischen Ausrichtung des mindestens einen optischen Bauteils (17) des zweiten optischen Systems,
**dadurch gekennzeichnet, dass** es Folgendes umfasst:
- einen ersten Schaltspiegel (10) und einen zweiten Schaltspiegel (15),
- wobei der erste Schaltspiegel (10) eine Position aufweist, in welcher der erste Schaltspiegel (10) in den einfallenden Lichtweg zwischen der Lichtquelle (1) und dem Mikroskopobjektiv (25) eingefügt ist, um den einfallenden Lichtstrahl in Richtung auf einen ersten Detektor (6), um eine optische Fehlausrichtung des einfallenden Strahlengangs zu erkennen,
- wobei der zweite Schaltspiegel (15) eine Position aufweist, in welcher der zweite Schaltspiegel in den einfallenden Strahlengang zwischen der Lichtquelle (1) und dem Mikroskopobjektiv (25) eingefügt ist, um den einfallenden Lichtstrahl an dem Rückführstrahlengang entlang in Richtung auf einen zweiten Detektor zu richten, um eine optische Fehlausrichtung auf dem Rückführstrahlengang zu erkennen,
und wobei die ersten und zweiten Schaltspiegel (10, 15) jeweils eine andere Position aufweisen, die zur Probenmessung aus dem einfallenden Strahlengang zurückgezogen ist,

2. Optisches Messgerät (100) nach Anspruch 1, wobei die Lichtquelle (1) eine Laserlichtquelle umfasst.

3. Optisches Messgerät (100) nach einem der Ansprüche 1 bis 2, wobei das Spektrometer ein Raman-Spektrometer für eine Raman-Analyse ist.

4. Optisches Messgerät nach einem der Ansprüche 1 bis 3, wobei der sekundäre Strahl durch eine Reflexion des einfallenden Strahls auf die Probe (23) generiert wird.

5. Optisches Messgerät nach einem der Ansprüche 1 bis 3, wobei der sekundäre Strahl durch eine Übertragung des einfallenden Strahls auf die Probe (23) generiert wird.

6. Optisches Messgerät nach einem der Ansprüche 1 bis 5, wobei der erste Detektor (6) und/oder der zweite Detektor ein Vierquadrantendetektor ist.

7. Optisches Messgerät nach einem der Ansprüche 1 bis 6, wobei der zweite Detektor als Messdetektor (7) bezeichnet ist.

8. Optisches Messgerät nach einem der Ansprüche 1 bis 7, ferner umfassend ein Mikroskop-Visualisierungssystem, wobei das Visualisierungssystem eine Visualisierungskamera umfasst, wobei der erste und/oder der zweite Detektor Visualisierungskameras sind.

9. Optisches Messgerät nach einem der Ansprüche 1 bis 8, wobei der zweite Schaltspiegel (15) den einfallenden Lichtstrahl durch eine Eingangsschnittstelle des Spektrometers (27) in Richtung auf den Rückführstrahlengang in einer Richtung entgegen der Richtung des sekundären Lichts richtet.

10. Optisches Messgerät nach einem der Ansprüche 1 bis 9, wobei der erste Schaltspiegel (10) und/oder der zweite Schaltspiegel (15) teilweise reflektierende Spiegel sind.

11. Optisches Messgerät nach einem der Ansprüche 1 bis 10, ferner umfassend eine bewegbare Platte (11), welche die ersten und zweite Schaltspiegel (10, 15) trägt, und ferner umfassend eine große Apertur, um wahlweise: den einfallenden Lichtstrahl durch die große Apertur gehen zu lassen, oder um den ersten Schaltspiegel (10) oder den zweite Schaltspiegel (15) auf dem einfallenden Strahlengang zwischen der Lichtquelle (1) und dem Mikroskopobjektiv (25) einzufügen.

12. Optisches Messgerät nach einem der Ansprüche 1 bis 11, ferner umfassend ein Wiederausrichtungssteuereinheit und Mittel zum automatischen Nachstellen des optischen Systems (13, 9a, 9b, 9c) und des zweiten optischen Systems (1 4a, 14b, 17) in Abhängigkeit von der Detektion einer Fehlausrichtung in den einfallenden (4) oder sekundären (5) Strahlengängen.

13. Wiederausrichtungsverfahren für ein optisches Messgerät (100) nach einem der Ansprüche 1 bis 12, umfassend folgende Schritte:
a) vollständiges Ausrichten des optischen Messgeräts (100), Erfassen eines Bezugspunktbildes des einfallenden Lichts auf dem ersten Detektor (6) und Erfassen eines Bezugspunktbildes des Rückführlichts und/oder der Stärke des Rückführlichts auf dem zweiten Detektor,
b) Einfügen des ersten Schaltspiegels (10) auf dem einfallenden Strahlengang zwischen der Lichtquelle (1) und dem Mikroskopobjektiv (25) und Erkennen des einfallenden Lichts auf dem ersten Detektor (6), Messen der Fehlausrichtung zwischen dem Bezugspunktbild und dem einfallenden Licht, Nachstellen mindestens eines optischen Bauteils (13) in dem ersten optischen System (13, 9a, 9b, 9c) zum Korrigieren der Fehlausrichtung des einfallenden Strahlengangs.
c) Einfügen des zweiten Schaltspiegels (15) auf dem einfallenden Strahlengang zwischen der Lichtquelle (1) und dem Mikroskopobjektiv (25) und Erkennen des einfallenden Lichts auf dem zweiten Detektor, Messen der Fehlausrichtung zwischen dem Bezugspunktbild und dem Rückführlicht, Nachstellen mindestens optischen Bauteils (17) in dem zweiten optischen System (14a, 14b, 17) zum Korrigieren der Fehlausrichtung des Rückführstrahlengangs,

14. Wiederausrichtungsverfahren nach Anspruch 13, ferner umfassend folgende Schritte:
- Abtasten der Orientierung des optischen Bauteils (17) mit einem großen Verfahrschritt (19) an einer Abtastlinie (20) entlang, um die Position des Rückführlichts auf dem zweiten Detektor (7) ungefähr zu bestimmen, und dann
- Abtasten der Orientierung des optischen Bauteils (17) mit einem kleinen Verfahrschritt (21) an der Abtastlinie (20) entlang, um die Position des Rückführlichts auf dem zweiten Detektor (7) präzise zu bestimmen.

## Revendications

1. Appareil de mesure optique,(100) comprenant :
- une source lumineuse (1) pour générer un faisceau alumineux incident (4),
- une platine porte-échantillon (24) pour maintenir un échantillon (23) à mesurer,
- un objectif de microscope (25) pour focaliser ledit faisceau lumineux incident sur ledit échantillon (23),
- un premier système optique (13, 9a, 9b, 9c) comprenant au moins un composant optique (13) pour diriger ledit faisceau alumineux incident de ladite source lumineuse sur ledit objectif de microscope (25) le long d'un trajet de faisceau incident,
- des moyens pour ajuster l'alignement optique dudit au moins un composant optique (13) dudit premier système optique (13, 9a, 9b, 9c),
- un spectromètre (27) comprenant un détecteur de mesure (7) pour mesurer une lumière secondaire émise par ledit échantillon (23) sous une exposition audit faisceau incident,
- un deuxième système optique (14a, 14b, 17) comprenant au moins un composant optique (17) pour collecter la lumière secondaire générée par ledit échantillon (23) sous une exposition audit faisceau incident, et pour diriger ladite lumière secondaire (5) vers ledit spectromètre (27) le long d'un trajet de faisceau de retour,
- des moyens pour ajuster l'alignement optique dudit au moins un composant optique (17) dudit deuxième système optique,
**caractérisé en ce qu'**il comprend :
- un premier miroir de commutation (10) et un deuxième miroir de commutation (15),
- ledit premier miroir de commutation (10) ayant une position dans laquelle ledit premier miroir de commutation (10) est inséré sur ledit trajet de lumière incidente entre ladite source lumineuse (1) et ledit objectif de microscope (25), pour diriger ledit faisceau lumineux incident vers un premier détecteur (6) pour la détection d'un défaut d'alignement optique dudit trajet de faisceau incident,
- ledit deuxième miroir de commutation (15) ayant une position dans laquelle ledit deuxième miroir de commutation est inséré sur ledit trajet de lumière incidente entre ladite source lumineuse (1) et ledit objectif de microscope (25), pour diriger ledit faisceau lumineux incident le long dudit trajet de faisceau de retour vers un deuxième détecteur pour détecter un défaut d'alignement optique sur ledit trajet de faisceau de retour,
et dans lequel lesdits premier et deuxième miroirs de commutation (10, 15) ont chacun une autre position rétractée hors dudit trajet de faisceau incident pour la mesure de l'échantillon.

2. Appareil de mesure optique (100) selon la revendication 1, dans lequel ladite source lumineuse (1) comprend une source de lumière laser.

3. Appareil de mesure optique (100) selon l'une quelconque des revendications 1 à 2, dans lequel ledit spectromètre est un spectromètre de Raman pour une analyse de Raman.

4. Appareil de mesure optique selon l'une quelconque des revendications 1 à 3, lequel ledit faisceau secondaire est généré par réflexion dudit faisceau incident sur ledit échantillon (23).

5. Appareil de mesure optique selon l'une quelconque des revendications 1 à 3, dans lequel ledit faisceau secondaire est généré pair transmission dudit faisceau incident sur ledit échantillon (23).

6. Appareil de mesure optique selon l'une quelconque des revendications 1 à 5, dans lequel ledit premier détecteur (6) et/ou deuxième détecteur est un détecteur à quatre quadrants,

7. Appareil de mesure optique selon l'une quelconque des revendications 1 à 6, dans lequel ledit deuxième détecteur est ledit détecteur de mesure (7).

8. Appareil de mesure optique selon l'une quelconque des revendications 1 à 7, comprenant en outre un système d'observation au microscope, ledit système d'observation comprenant une caméra d'observation, lesdits premier et/ou deuxième détecteur(s) étant ladite caméra d'observation.

9. Appareil de mesure optique selon l'une quelconque des revendications 1 à 8, dans lequel ledit deuxième miroir de commutation (15) dirige ledit faisceau lumineux incident à travers un orifice d'entrée dudit spectromètre (27) vers ledit trajet de faisceau de retour, dans une direction opposée à la direction de ladite lumière secondaire.

10. Appareil de mesure optique selon l'une quelconque des revendications 1 à 9, dans lequel ledit premier miroir de commutation (10) et/ou ledit deuxième miroir de commutation (15) est(sont) un(des) miroir(s) partiellement réfléchissant(s).

11. Appareil de mesure optique selon l'une quelconque des revendications 1 à 10, comprenant en outre un plateau mobile (11) supportant lesdits premier et deuxième miroirs de commutation (10, 15) et comprenant en outre une grande ouverture permettant sélectivement : le passage du lumineux incident à travers ladite grande ouverture ou l'insertion dudit premier miroir de commutation (10) ou l'insertion dudit deuxième miroir de commutation (15) sur ledit trajet du faisceau incident entre ladite source lumineuse (1) et ledit objectif de microscope (25).

12. Appareil de mesure optique selon l'une quelconque des revendications 1 à 11, comprenant en outre une unité de commande de réalignement et des moyens pour réajuster automatiquement ledit premier système optique (13, 9a, 9b, 9c) et ledit deuxième système optique (14a, 14b, 17) en fonction de la détection d'un défaut d'alignement sur lesdits trajets de faisceau incident (4) ou secondaire (5).

13. Procédé de réalignement pour un appareil de mesure optique (100) selon l'une quelconque des revendications 1 à 12, comprenant les étapes consistant à :
a) aligner complètement ledit appareil de mesure optique (100), acquérir une image de point de référence de la lumière incidente sur ledit premier détecteur (6), et acquérir une image de point de référence de la lumière de retour et/ou l'intensité de la lumière de retour sur le deuxième détecteur,
b) insérer ledit premier miroir de commutation (10) sur ledit trajet de faisceau incident entre ladite source lumineuse (1) et ledit objectif de microscope (25), et détecter ladite lumière incidente sur ledit premier détecteur (6), mesureur le défaut d'alignement entre ladite image de point de référence et ladite lumière incidente, réajuster au moins un composant optique (13) du premier système optique (13, 9a, 9b, 9c) pour corriger ledit défaut d'alignement du trajet de faisceau incident,
c) insérer ledit deuxième miroir de commutation (15) sur ledit trajet du faisceau incident entre ladite source lumineuse (1) et ledit objectif de microscope (25), et détecter ladite lumière incidente sur ledit deuxième détecteur, mesurer le défaut d'alignement entre ladite image de point de référence et ladite lumière de retour, réajuster au moins un composant optique (17) du deuxième système optique (14a, 14b, 17) pour corriger ledit défaut d'alignement du trajet de faisceau de retour.

14. Procédé de réalignement selon la revendication 13, comprenant en outre les étapes consistant à :
- balayer l'orientation dudit composant optique (17) selon un grand pas de déplacement (19) le long d'une ligne de balayage (20) pour déterminer approximativement la position de la lumière de retour sur ledit deuxième détecteur (7), puis
- balayer l'orientation dudit composant optique (17) selon un petit pas de déplacement (21) le long de la ligne de balayage (20) pour déterminer précisément la position de la lumière de retour sur ledit deuxième détecteur (7).
